# EUROPEAN PATENT APPLICATION

(11) **EP 4 663 936 A1**
(43) Date of publication of application: **17.12.2025**
(21) Application number: 25181733.4
(22) Date of filing: 10.06.2025
(51) Int. Cl.: F02M 35/16, B62J 35/00, B62K 11/04, B62M 7/02

(54) **MOTORCYCLE**

(30) Priority: 14.06.2024 JP 2024096466; 14.11.2024 JP 2024198982
(71) Applicant: Kawasaki Motors, Ltd., Akashi, Hyogo 673-8666 (JP)
(72) Inventor: TAKEUCHI, Hiroshi, Akashi-shi, Hyogo, 673-8666 (JP)
(74) Representative: Hoefer & Partner Patentanwälte mbB

(57) **Abstract**

There is provided a motorcycle including: an internal combustion engine; an air cleaner box configured to supply purified air to the internal combustion engine; a fuel tank configured to store fuel; and a main frame configured to support the internal combustion engine, the air cleaner box, and the fuel tank. The internal combustion engine is supported in a posture closer to a vertical posture than a horizontal posture. The air cleaner box is adjacent to the internal combustion engine. The fuel tank is located behind the air cleaner box.

## Description

### TECHNICAL FIELD

The present disclosure relates to a motorcycle.

### BACKGROUND ART

JP2000-280951A and JP2009-073489A disclose a motorcycle.

In JP2000-280951A, a cylinder protruding from a front crankcase of an internal combustion engine is laid down substantially horizontally.

In JP2009-073489A, a four-stroke in-line two-cylinder engine with a cylinder portion protruding substantially horizontally from the crankcase forward of a vehicle body is used.

If the internal combustion engine is long in a front-rear direction, a wheelbase becomes long.

On the other hand, if the internal combustion engine is long vertically, a getting on and off performance may deteriorate.

### SUMMARY OF INVENTION

Therefore, the present disclosure a motorcycle which can shorten the wheelbase while preventing the deterioration of the getting on and off performance.

According to an illustrative aspect of the present disclosure, a motorcycle includes: an internal combustion engine; an air cleaner box configured to supply purified air to the internal combustion engine; a fuel tank configured to store fuel; and a main frame configured to support the internal combustion engine, the air cleaner box, and the fuel tank. The internal combustion engine is supported in a posture closer to a vertical posture than a horizontal posture. The air cleaner box is adjacent to the internal combustion engine. The fuel tank is located behind the air cleaner box.

According to the motorcycle, it is possible to shorten the wheelbase while preventing the deterioration of the getting on and off performance.

### BRIEF DESCRIPTION OF DRAWINGS

Fig. 1 is a schematic side view illustrating a motorcycle according to a first embodiment;
Fig. 2 is a schematic plan view illustrating the motorcycle according to the first embodiment;
Fig. 3 is a schematic side view illustrating a motorcycle according to a second embodiment; and
Fig. 4 is a partial schematic side view illustrating a motorcycle according to a modification.

### DESCRIPTION OF EMBODIMENTS

### (First Embodiment)

A motorcycle according to a first embodiment will be described below. In the present embodiment, the motorcycle is a motorcycle having steps for a driver who places feet.

The steps may, for example, be rod-shaped. A motorcycle having the steps for the driver may also include a gear change pedal and a clutch lever operated by foot, as well as a transmission in which the gear ratio is changed through the operation of the gear change pedal and clutch lever. The motorcycle having the steps for the driver may include an automatic transmission mechanism that automatically changes a gear without operating a clutch lever. The motorcycle having the steps for the driver may be a motorcycle that does not include a foot-operated brake pedal.

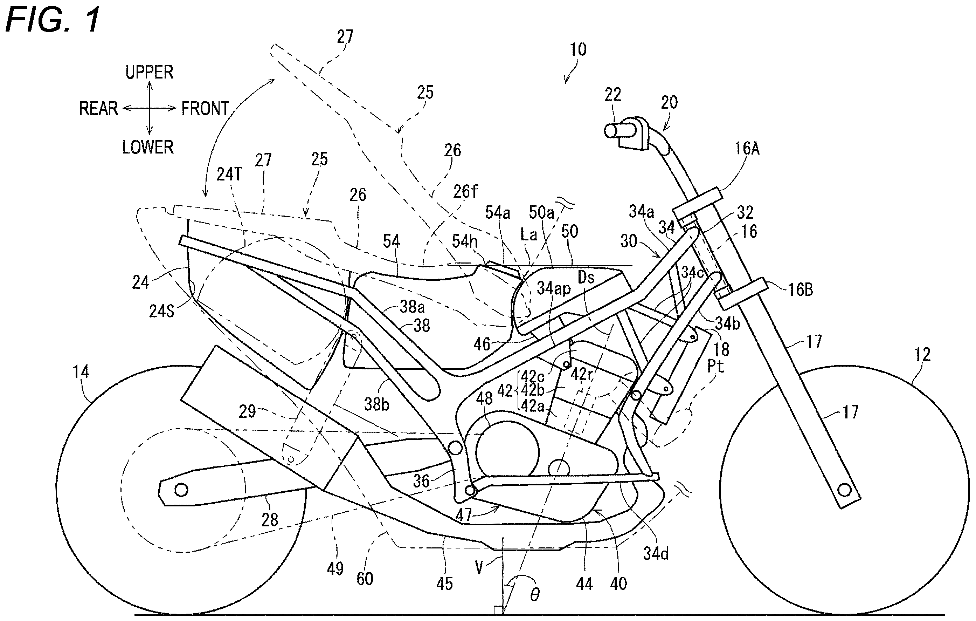

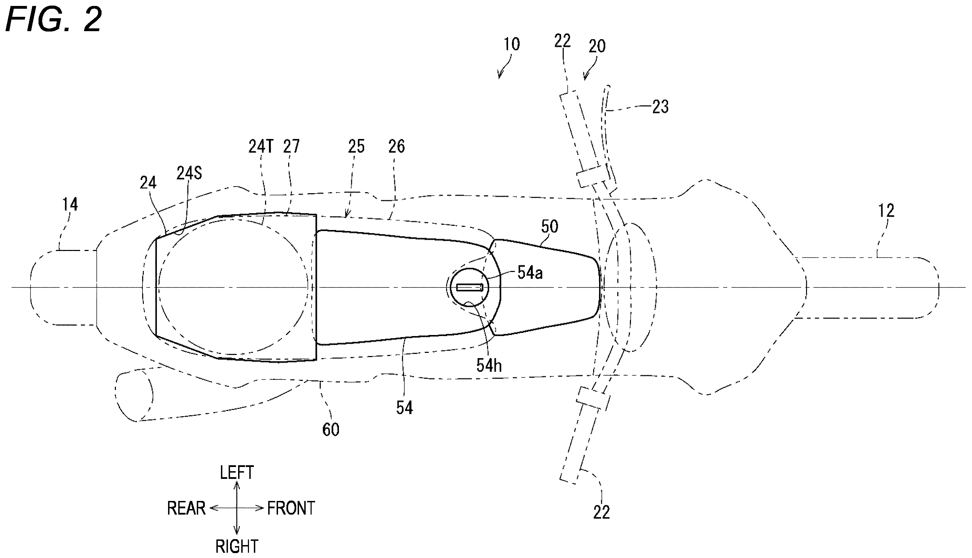

Fig. 1 is a schematic side view illustrating a motorcycle 10, and Fig. 2 is a schematic plan view illustrating the motorcycle 10.

An overall configuration of the motorcycle 10 will be described.

The motorcycle 10 includes a main frame 30, a front wheel 12, a rear wheel 14, and a handle device 20. In the following description, when referring to upper and lower, front and rear, and left and right, each direction is defined as follows. First, a side of the motorcycle 10 on which the front wheel 12 and the rear wheel 14 are in contact with a road surface is referred to as the lower, and the opposite side is referred to as the upper. A traveling direction when the motorcycle 10 travels is referred to as the front, and the opposite side is referred to as the rear. Further, in a state in which the driver is riding on the motorcycle 10 facing forward, the left and right with respect to the driver are referred to as left and right of the motorcycle 10. In the present embodiment, a left-right direction may be referred to as a vehicle width direction.

The front wheel 12 is rotatably supported on a front side of the main frame 30 via a front fork 17. The rear wheel 14 is rotatably supported on a rear side of the main frame 30 via a swing arm 28. The handle device 20 is supported on the front side of the main frame 30.

The motorcycle 10 can travel on the road surface by causing the front wheel 12 and the rear wheel 14 to rotate in a state in which the front wheel 12 and the rear wheel 14 are in contact with the road surface. When the handle device 20 is rotated, the front wheel 12 rotates around a steering shaft. Accordingly, the motorcycle 10 can change the traveling direction.

The motorcycle 10 includes an internal combustion engine 40, an air cleaner box 50, and a fuel tank 54. The internal combustion engine 40, the air cleaner box 50, and the fuel tank 54 are supported by the main frame 30. A support object being supported by the main frame 30 includes a case in which the support object is directly supported by the main frame 30 and a case in which the support object is supported on the main frame 30 via another component or an intervening member such as a bracket.

The air cleaner box 50 supplies purified air to the internal combustion engine 40. The fuel tank 54 stores fuel to be burned in the internal combustion engine 40. The fuel in the fuel tank 54 and the air purified by the air cleaner box 50 are supplied to the internal combustion engine 40. The internal combustion engine 40 generates a rotational driving force for traveling by burning the fuel to be supplied from the fuel tank 54 using the air to be supplied from the air cleaner box 50.

The automatic transmission mechanism 48 may be integrated with the internal combustion engine 40. The automatic transmission mechanism 48 may be a continuously variable transmission capable of continuously changing a gear ratio. The continuously variable transmission may include, for example, two variable-diameter pulleys and an annular belt that travels between the two variable-diameter pulleys, and may adjust the gear ratio by changing effective diameters of the two variable-diameter pulleys.

The rotational driving force of the automatic transmission mechanism 48 is transmitted to the rear wheel 14 via a power transmission device 49. For example, the power transmission device 49 may be a chain wound around a gear provided on an output shaft of the automatic transmission mechanism 48 and a gear provided on the rear wheel 14. As another example, an annular belt such as a toothed belt may be used as a power transmission mechanism.

The motorcycle 10 further includes a driver seat 26 on which the driver sits. The driver seat 26 is a seat on which the driver sits. The driver can operate the handle device 20 in a state of sitting on the driver seat 26.

The motorcycle 10 may include a storage portion 24. The storage portion 24 is a storage case having a storage space 24S for an article. A storage object 24T may be, for example, a helmet.

The motorcycle 10 may include steps. The step is a portion on which a tip portion of foot of the driver who sits on the driver seat 26 is placed. For example, the steps are located on both outer sides of a vehicle body. A state in which the driver sits on the driver seat 26 and places the tip portions of feet on the steps is a driving position of the driver. In this state, the driver can operate the handle device 20 to drive the motorcycle 10. The tip portion of foot refers to a portion of the foot that is further forward than an ankle.

The motorcycle 10 may include a cover 60 that covers the main frame 30 and the internal combustion engine 40 from the left and right. The cover 60 is supported at a constant position by the main frame 30. The steps protrude outward in both left and right of the cover 60. The step may be directly supported on the main frame 30, may be supported on the main frame 30 via a bracket, or may be supported on the main frame 30 via the cover 60.

A configuration of each portion will be described more specifically.

The main frame 30 includes a head pipe 32, a pair of left and right front frames 34, a pair of left and right intermediate frames 36, and a pair of left and right rear frames 38.

The main frame 30 is a rigid member made of metal or the like. The main frame 30 may be implemented by, for example, a frame in which a metal pipe is bent and welded, a cast frame, or a combination thereof.

The head pipe 32 is provided on the front side of the main frame 30. The head pipe 32 is disposed in a posture inclined forward as it extends downward.

A steering shaft 16 is rotatably inserted into the head pipe 32. An upper bracket 16A and an under bracket 16B are supported on the steering shaft 16. A front fork 17 is supported by the upper bracket 16A and the under bracket 16B so as to extend downward. The front wheel 12 is rotatably supported at a lower end of the front fork 17. The front fork 17 is a front suspension that can absorb impact from the road surface to the vehicle 10 or reduce vibration of the vehicle 10.

The handle device 20 is supported on the upper bracket 16A. The handle device 20 includes a pair of left and right handle bars 22. When the driver steers the pair of handle bars 22, the upper bracket 16A, the under bracket 16B, and the front fork 17 rotate about a central axis of the head pipe 32, and the front wheel 12 also rotates about the central axis of the head pipe 32. Accordingly, the front wheel 12 can be turned by steering the handle device 20.

A brake lever 23 is supported on one or both of the pair of handle bars 22. The brake lever 23 is a lever for braking one or both of the front wheel 12 and the rear wheel 14.

A meter unit that displays information related to the traveling of the motorcycle 10, such as a speed, may be supported on the handle device 20. The meter unit may be supported directly or indirectly on the main frame 30 near the handle device 20.

The handle device 20 and the meter unit may be provided with interface devices such as switches that receive various instructions to the motorcycle 10.

The pair of left and right front frames 34 extend rearward while branching into the left and right sides from the head pipe 32.

The front frame 34 includes an upper frame portion 34a and a lower frame portion 34b.

The upper frame portion 34a extends rearward from an upper portion of the head pipe 32. The lower frame portion 34b extends rearward from a lower portion of the head pipe 32. The upper frame portion 34a and the lower frame portion 34b face obliquely downward and rearward from the head pipe 32 in a side view. The upper frame portion 34a extends rearward of the lower frame portion 34b and extends rearward of the internal combustion engine 40. A portion of the lower frame portion 34b on a head pipe 32 side extends below and in parallel with the upper frame portion 34a toward a front portion of the internal combustion engine 40. The lower frame portion 34b is bent at a position in front of the internal combustion engine 40 and extends obliquely downward and forward.

The upper frame portion 34a and the lower frame portion 34b are coupled between the head pipe 32 and the internal combustion engine 40 by a plurality of coupling frames 34c. The plurality of coupling frames 34c couples the upper frame portion 34a and the lower frame portion 34b to form a truss structure.

On each of the left and right sides, the intermediate frame 36 extends downward from a rear end portion of the upper frame portion 34a.

The swing arm 28 is swingably supported on the intermediate frame 36. For example, the swing arm 28 is supported on an intermediate portion in a longitudinal direction of the intermediate frame 36. The swing arm 28 extends obliquely downward from the intermediate frame 36. The rear wheel 14 is rotatably supported at a rear end portion of the swing arm 28. The rear wheel 14 can be vertically displaced due to the swing of the swing arm 28. The intermediate frame 36 may be referred to as a pivot bracket.

A lower end portion of the intermediate frame 36 and the lower frame portion 34b may be coupled by an additional frame 34d. Accordingly, a rigidity of the main frame 30 is further increased.

The internal combustion engine 40 is supported by the front frames 34 and the intermediate frames 36.

The internal combustion engine 40 is disposed between the front wheel 12 and the rear wheel 14 in the front-rear direction. The internal combustion engine 40 is disposed in front of the swing arm 28. The internal combustion engine 40 is disposed below the upper frame portion 34a.

The internal combustion engine 40 includes a cylinder assembly 42 and the crankcase 44.

The cylinder assembly 42 includes a cylinder block 42a, a cylinder head 42b, and a head cover 42c. A columnar space for forming a combustion chamber 42r is formed in the cylinder block 42a, and a piston is accommodated in the space so as to be reciprocally movable. The cylinder head 42b incorporates an ignition plug, intake and exhaust valves, and the like, and covers an upper side of the cylinder block 42a to form the combustion chamber 42r together with the cylinder block 42a. The head cover 42c is coupled to the cylinder head 42b on a side opposite to the cylinder block 42a, and covers the intake and exhaust valves or the like.

The crankcase 44 is coupled to the cylinder block 42a on a side opposite to the cylinder head 42b, and rotatably supports a crankshaft.

The internal combustion engine 40 may be an in-line engine in which a plurality of combustion chambers 42r are arranged in series. In the present embodiment, for example, the internal combustion engine 40 is a two-cylinder in-line engine having two combustion chambers 42r.

The automatic transmission mechanism 48 may be integrated with one of the left and right sides, and the rear of the crankcase 44.

Here, a unit in which the automatic transmission mechanism 48 is integrated with the internal combustion engine 40 is referred to as a power unit 47.

The power unit 47 including the internal combustion engine 40 is supported on the main frame 30 in the following posture.

That is, the internal combustion engine 40 is in a posture closer to a vertical posture than a horizontal posture. Here, a reference direction Ds for determining the posture of the internal combustion engine 40 is a direction along a central axis of the combustion chamber 42r. As described above, the combustion chamber 42r is the columnar space formed by the cylinder head 42b and the cylinder block 42a, and the direction along the central axis of the columnar space is the reference direction Ds of the internal combustion engine 40. The reference direction Ds is also a direction in which the piston moves in the combustion chamber 42r.

The internal combustion engine 40 being a posture closer to the vertical posture than the horizontal posture means that an angle θ of the reference direction Ds with respect to a vertical direction V along a gravity direction is less than 45 degrees.

The internal combustion engine 40 is in a horizontal posture. The horizontal posture is a posture in which an arrangement direction of the combustion chambers 42r is along the vehicle width direction.

That is, the internal combustion engine 40 is supported by the main frame 30 in a posture in which the plurality of combustion chambers 42r extend along the vehicle width direction and a direction of the central axis of the combustion chamber 42r is closer to the vertical posture than the horizontal posture.

More specifically, the crankcase 44 and the automatic transmission mechanism 48 integrated with the crankcase 44 are disposed between the left and right intermediate frames 36 and forward of the space. The left and right intermediate frames 36 are coupled to a rear end portion of an integrated portion of the crankcase 44 and the automatic transmission mechanism 48 by screw fastening or the like. The integrated portion of the crankcase 44 and the automatic transmission mechanism 48 is supported in a posture obliquely downward and forward from the left and right intermediate frames 36.

The crankcase 44 is located at a front portion of the integrated portion of the crankcase 44 and the automatic transmission mechanism 48. The crankcase 44 is located between the intermediate frame 36 and a lower end portion of the lower frame portion 34b. The additional frame 34d passes outside the crankcase 44 in the vehicle width direction.

The cylinder assembly 42 protrudes upward from above the crankcase 44. The combustion chamber 42r is formed in the cylinder assembly 42, and the combustion chamber 42r is inclined obliquely forward. The cylinder assembly 42 itself also protrudes from an upper end portion of the crankcase 44 while being inclined obliquely forward.

The cylinder assembly 42 is located below the upper frame portion 34a at an intermediate portion in an extending direction of the upper frame portion 34a. A rear portion of the cylinder assembly 42 is supported on the intermediate portion of the upper frame portion 34a.

The cylinder assembly 42 is located behind the lower frame portion 34b. A front portion of the cylinder assembly 42 is supported on an intermediate portion of the lower frame portion 34b.

The cylinder assembly 42 is interposed between the intermediate portion of the upper frame portion 34a and the intermediate portion of the lower frame portion 34b, and thus the cylinder assembly 42 itself can function as a rigid body that keeps a positional relation of the upper frame portion 34a and the lower frame portion 34b constant. In addition, the power unit 47 is interposed between the intermediate frames 36 and the front frames 34, and thus the power unit 47 can function as a rigid body that keeps a positional relation of the intermediate frames 36 and the front frames 34 constant.

A support location between the power unit 47 and the main frame 30 may be such that the power unit 47 is directly supported on the main frame 30 by screw fastening or the like, or a support piece extending from the power unit 47 or the main frame 30 is supported on the main frame 30 or the power unit 47 by screw fastening or the like. For example, a support piece 34ap may protrude from the upper frame portion 34a, and the support piece 34ap may be screwed to the cylinder assembly 42.

The power unit 47 is supported by the intermediate frame 36 from the rear, and the cylinder assembly 42 of the power unit 47 is coupled to the front frame 34. Therefore, a forward driving force generated by contact between the ground and the rear wheel 14 is effectively transmitted from the intermediate frames 36 to the front frames 34 via the power unit 47, and the driving force is effectively received by the entire vehicle 10. In addition, the power unit 47 is supported to be suspended by the upper frame portion 34a, and thus a weight of the power unit 47 is likely to be supported by the main frame 30.

By bringing the internal combustion engine 40 close to the vertical posture, a front-rear length of the internal combustion engine 40 can be shortened as compared with a case in which the internal combustion engine 40 is close to the horizontal posture. Accordingly, an arrangement space of the internal combustion engine 40 to be secured between the front wheel 12 and the rear wheel 14 can be reduced, and a wheelbase is likely to be reduced.

The internal combustion engine 40 may be in an oblique posture with respect to the vertical direction V instead of the vertical posture. For example, the internal combustion engine 40 may be inclined by 10 degrees or more, preferably 15 degrees or more with respect to the vertical direction V. Accordingly, a height of the internal combustion engine 40 is likely to be reduced.

The air cleaner box 50 is adjacent to the internal combustion engine 40. The air cleaner box 50 being adjacent to the internal combustion engine 40 means that the air cleaner box 50 and the internal combustion engine 40 are in a positional relation of being adjacent to each other, and the air cleaner box 50 does not need to be in contact with the internal combustion engine 40.

In the present embodiment, the air cleaner box 50 is located above the internal combustion engine 40. More specifically, the air cleaner box 50 is located above the cylinder assembly 42. The air cleaner box 50 is supported on the main frame 30, for example, the upper frame portions 34a by screw fastening or the like. For example, the air cleaner box 50 may be supported to protrude upward from between the pair of left and right upper frame portions 34a. The air cleaner box 50 may be supported on the main frame 30 via the internal combustion engine 40.

The air cleaner box 50 includes a box formed of resin or the like and a filter accommodated in the box. The filter removes a foreign matter contained in air taken into the internal combustion engine 40 from the outside. The air cleaner box 50 includes an openable and closable lid 50a. The lid 50a is located above the upper frame portion 34a in a side view.

The fuel tank 54 is located behind the air cleaner box 50. The fuel tank 54 is a tank that accommodates fuel. A lid 54a and a fuel supply port 54h for supplying fuel into the fuel tank 54 are provided at any position in the fuel tank 54. For example, the fuel supply port 54h and the lid 54a are provided at a front position on an upper portion of the fuel tank 54.

The fuel tank 54 may be coupled to the rear side of the air cleaner box 50 without another member interposed therebetween. The fuel tank 54 and the air cleaner box 50 may be in contact with each other, a gap may be present between the fuel tank 54 and the air cleaner box 50, or another member may be interposed therebetween.

The fuel tank 54 may be disposed at the same position as the air cleaner box 50 in an up-down direction. In this case, at least part of the lower portion of the air cleaner box 50 and at least part of the upper portion of the fuel tank 54 may overlap with each other in a front view. For example, half or more of the fuel tank 54 in the up-down direction may overlap the air cleaner box 50 in the front view.

The fuel tank 54 may be disposed at a position different from the air cleaner box 50 in the up-down direction. For example, the half or more of the fuel tank 54 in the up-down direction may be shifted upward or downward with respect to the air cleaner box 50. The air cleaner box 50 is disposed above the cylinder head 42b to overlap with the cylinder head 42b vertically, and in a position that overlaps with the head pipe 32 the front view. As a result, the air cleaner box 50 is effectively protected.

The fuel tank 54 may have any shape. A front portion of the fuel tank 54 may have a recessed shape in accordance with a shape of a rear end portion of the air cleaner box 50. The fuel tank 54 may be formed in a shape that gradually widens toward the rear.

The fuel tank 54 may be supported on the main frame 30, for example, the rear frames 38 of the main frame 30 by screw fastening or the like. For example, a front half portion of the fuel tank 54 may be located above the upper frame portion 34a, and a rear half portion of the fuel tank 54 may be located between the rear frames 38 and supported by the rear frames 38.

The fuel tank 54 is located rearward of the cylinder assembly 42 in the front-rear direction. That is, the fuel tank 54 is disposed at a position different from the cylinder assembly 42 in the front-rear direction.

The fuel tank 54 may be disposed at a position overlapping the crankcase 44 or the automatic transmission mechanism 48 in the front-rear direction. In the present embodiment, in the front-rear direction, a front portion of half or less of the fuel tank 54 is disposed at a position overlapping the crankcase 44 or the automatic transmission mechanism 48. Accordingly, since the fuel tank 54 is located rearward of the cylinder assembly 42 not to overlap vertically and is located disposed at a position overlapping vertically with the crankcase 44, especially a rear portion thereof, it is easier to secure the tank capacity in the space behind the cylinder assembly 42 and above the crankcase 44.

A throttle body 46 for adjusting an amount of air fed into the internal combustion engine 40 is provided at an upper position in a rear portion of the cylinder head 42b. The throttle body 46 is located between the internal combustion engine 40 and the air cleaner box 50. The throttle body 46 is located between the pair of upper frame portions 34a.

An exhaust pipe 45 for discharging the burnt gas is coupled to the internal combustion engine 40. One end of the exhaust pipe 45 is connected to an exhaust port formed in the cylinder head 42b. The exhaust pipe 45 extends downward from the front portion of the internal combustion engine 40 and passes along a side of a lower portion of the internal combustion engine 40 before extending rearward. The other end portion of the exhaust pipe 45 extends obliquely upward through the outside of the swing arm 28. The other end portion of the exhaust pipe 45 is located below the rear frame 38 of the main frame 30.

A radiator 18 for cooling the cooling water passing through a water jacket formed in the internal combustion engine 40 is provided in front of the pair of lower frame portions 34b. The radiator 18 is supported on, for example, the lower frame portions 34b. In the support state, the radiator 18 is located between the internal combustion engine 40 and the front wheel 12. Pipes drawn from left and right sides of the radiator 18 are coupled to the water jacket formed in the internal combustion engine 40.

On each of the left and right sides, the rear frame 38 extends obliquely upward and rearward from a rear end portion of the front frame 34. It can also be said that the intermediate frame 36 extends downward at a coupling location between the rear frame 38 and the front frame 34.

The rear frame 38 may include a plurality of frames. In the present embodiment, the rear frame 38 includes a frame 38a extending to a rear end portion of a tandem seat 27 and a lower support frame 38b extending to an intermediate portion of the frame 38a.

A rear suspension 29 is interposed between the rear frame 38 and the swing arm 28. The rear suspension 29 can absorb impact from the road surface to the vehicle 10 and reduce vibration of the vehicle 10.

The storage portion 24 is located behind the fuel tank 54. The storage portion 24 is located between the pair of left and right rear frames 38. The storage portion 24 may be supported on the pair of rear frames 38 by screw fastening or the like.

The storage portion 24 includes a bottom portion and a peripheral wall that covers a space above the bottom portion, and may be opened upward. The storage portion 24 may have the storage space 24S corresponding to a storage object. If the storage object is a helmet, the storage portion 24 is set to be wide. As a result, in a portion of the motorcycle 10 behind the handle device 20 and above the steps, a portion in which the storage portion 24 is present may be formed as a widest portion.

As described above, the cover 60 covers left and right sides of the main frame 30 and the internal combustion engine 40. The cover 60 is formed of, for example, resin. The cover 60 may extend to cover the left, right, and upper sides of the air cleaner box 50. The cover 60 may extend to cover at least a part of the fuel tank 54, for example, left and right sides of a lower portion of the fuel tank 54. The cover 60 may extend to cover left and right sides of the storage portion 24.

The cover 60 may cover the rear of the rear frames 38. The cover 60 may include a cowl portion that covers the front of the head pipe 32 to reduce air resistance during traveling.

The cover 60 may be opened forward between the cowl portion and the front wheel 12. During traveling, air taken in from the opening may flow into the radiator 18 and the air cleaner box 50.

The cover 60 has any shape that can be appropriately changed from various viewpoints such as design, air resistance, or rigidity.

The driver seat 26 is located behind the air cleaner box 50. That is, the air cleaner box 50 is located in front of the driver seat 26.

The driver seat 26 is located above the fuel tank 54. That is, the fuel tank 54 is located below the driver seat 26. For example, a center of front and rear ends of the fuel tank 54 is located between front and rear ends of the driver seat 26. In addition, for example, half or more of the fuel tank 54 overlaps the driver seat 26 in the front-rear direction. In the present embodiment, in a range in which the fuel supply port 54h of the fuel tank 54 is located in a width direction, a seat surface of the driver seat 26 is located behind the fuel supply port 54h. A rear end of the driver seat 26 extends rearward of a rear end of the fuel tank 54 and reaches above a front end of the storage portion 24.

Preferably, the air cleaner box 50 is lower than a height position La of a seat surface 26f of the driver seat 26. Here, the height position La of the seat surface 26f may be based on a lowest position in a region of the driver seat 26 that supports buttocks of the driver. If the air cleaner box 50 is lower than the position La, it is easy to lower a height of the vehicle 10.

The fuel supply port 54h may be located below the driver seat 26 or may be located on a side of the driver seat 26. The fuel supply port 54h may be located on an upper surface of the fuel tank 54 at a position rearward of a front edge of the seat surface of the driver seat 26, and the driver seat 26 may be partially opened to expose the fuel supply port to the outside.

A front end of the driver seat 26 may be located above a rear end portion of the power unit 47 in the front-rear direction. The rear end of the driver seat 26 may be located forward of a front end of the rear wheel 14 in the front-rear direction.

When the driver sits on the driver seat 26, the tip portions of feet of the driver extends below the driver seat 26 and reaches the steps.

The tandem seat 27 is located behind the driver seat 26. A seat surface of the tandem seat 27 is higher than the seat surface of the driver seat 26. The tandem seat 27 is located on the storage portion 24. A rear end of the tandem seat 27 extends rearward of a rear end of the storage portion 24.

The driver seat 26 and the tandem seat 27 are integrally coupled to form a seat unit 25. A portion of the cover 60 in which the seat unit 25 is disposed is opened upward. The seat unit 25 closes the opening from above. In a state in which the seat unit 25 closes the opening of the cover 60, the seat unit 25 may be directly or indirectly supported from below by the main frame 30.

A front end portion of the driver seat 26 is openably and closably supported by the cover 60. The seat unit 25 is opened and closed about a support shaft at the front end portion of the driver seat 26. The upward opening of the storage portion 24 is located rearward of the opening of the seat unit 25. In a state in which the seat unit 25 is opened, the opening of the storage portion 24 is opened to the outside, and the storage object 24T can be stored from the outside. For example, the storage portion 24 has the storage space 24S capable of storing a helmet as the storage object 24T, and can store the helmet in the storage space 24S from above. The upward opening of the storage portion 24 is closed by closing the seat unit 25. The seat unit 25 may be opened and closed about the rear end portion. Only a part of the seat unit 25 may be openable and closable. For example, a portion of the driver seat 26 and a portion of the tandem seat 27 of the seat unit 25 may be separately opened and closed. In this case, the portion of the driver seat 26 may be opened and closed about the front end or a side edge. The tandem seat 27 may be opened and closed about the rear end or a side edge.

A portion of the cover 60 that covers the air cleaner box 50 may be detachable from another portion of the cover 60, and the air cleaner box 50 may be exposed to the outside. The seat unit 25 may cover the air cleaner box 50, and the air cleaner box 50 may be exposed to the outside by opening the seat unit 25.

According to the motorcycle 10 as described above, the internal combustion engine 40 is supported in a posture closer to the vertical posture than the horizontal posture, and thus the arrangement space of the internal combustion engine 40 in the front-rear direction can be shortened. Accordingly, the wheelbase can be made shorter as compared with the case in which the internal combustion engine 40 is in the posture close to the horizontal posture. If the wheelbase is shortened, a turning radius of the motorcycle 10 can be made smaller, and the motorcycle 10 can be easily handled.

The fuel tank 54 is located behind the air cleaner box 50, and thus a height position of the fuel tank 54 can be made lower as compared with a case in which the fuel tank is disposed on the air cleaner box. Accordingly, when the driver gets on and off the motorcycle 10, a height for straddling the motorcycle 10 can be reduced, and a getting on and off performance is less likely to deteriorate. In addition, as compared with the case in which the fuel tank is disposed on the air cleaner box, the fuel tank 54, which is a heavy object, can be lowered and disposed close to a position of the center of gravity of the vehicle 10, and a motion performance and a stability of the motorcycle 10 are further improved. Accordingly, a steering stability is further improved. The fuel tank 54 is heavier than the air cleaner box 50 and the storage portion 24. In addition, a mass varies depending on an amount of internal fuel. By disposing the fuel tank 54 closer to the center of gravity of the vehicle 10 than the air cleaner box 50 and the storage portion 24, it is easy to improve the motion performance and the stability.

In a case in which the storage portion is located directly below or obliquely downward and forward of the driver seat 26, if a volume of the storage portion is increased, a portion of the vehicle located directly below or obliquely downward and forward of the driver seat may be widened. In the present embodiment, the storage portion 24 is located behind the fuel tank 54. Therefore, by increasing the volume of the storage portion 24, even if a width of a portion of the vehicle 10 in which the storage portion 24 is provided increases, the width of the portion located directly below or obliquely downward and forward of the driver seat 26 is less likely to be affected. Therefore, the driver who sits on the driver seat 26 can easily put the feet down without spreading the feet widely, and can easily sit on the driver seat 26.

In particular, when the storage portion 24 stores the helmet as the storage object, the storage portion 24 is wide, and as a result, the portion of the vehicle 10 in which the storage portion 24 is disposed is likely to be wide. In such a case, the driver can also easily put the feet down without spreading the feet widely regardless of the width of the storage portion 24.

The air cleaner box 50 is located in front of the driver seat 26. Therefore, the air flowing into from the front during traveling easily flows into the air cleaner box 50 without being obstructed by the driver seat 26. Therefore, the air cleaner box 50 can easily take in the air well.

Further, if the air cleaner box 50 is lower than the seat surface of the driver seat 26 in a side view, a height of the vehicle 10 is likely to be reduced in front of the driver seat 26. Accordingly, the driver who is about to sit on the driver seat 26 easily gets on and off the vehicle 10 by straddling the vehicle 10 in front of the driver seat 26.

The fuel tank 54 is located below the driver seat 26, and thus the fuel tank 54 is likely to be brought close to the center of gravity of the vehicle 10 in the front-rear direction. Accordingly, the stability and maneuverability of the vehicle 10 are further improved.

### (Second Embodiment)

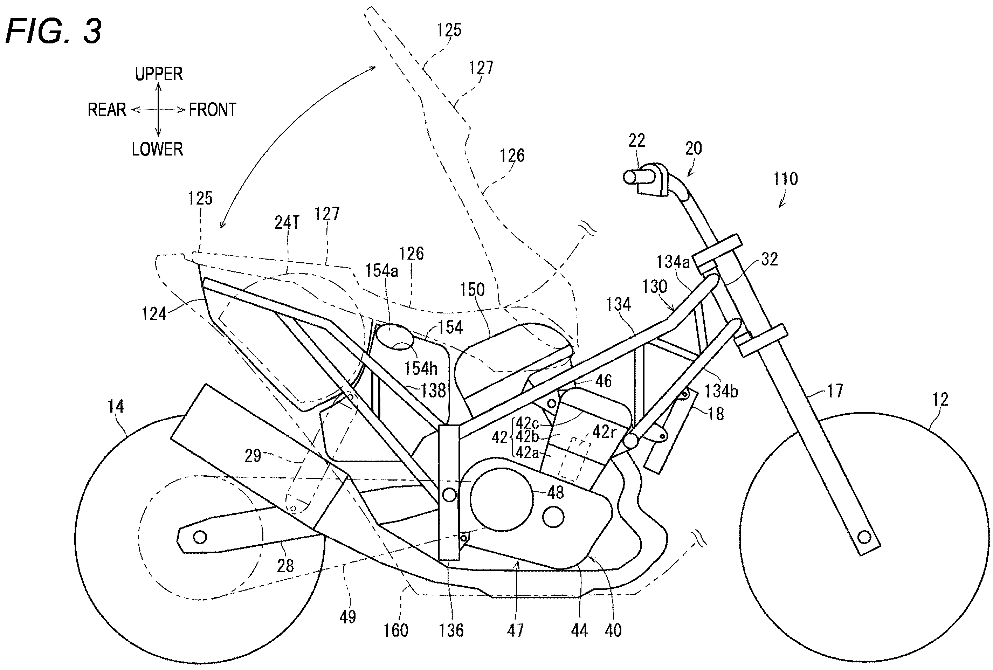

A motorcycle 110 according to a second embodiment will be described below. Fig. 3 is a schematic side view illustrating the motorcycle 110. In the description of the present embodiment, the same components as those described in the first embodiment are denoted by the same reference numerals, and the description thereof will be omitted.

The motorcycle 110 includes a main frame 130. Similar to the main frame 30, the main frame 130 includes the head pipe 32, a pair of left and right front frames 134, a pair of left and right intermediate frames 136, and a pair of left and right rear frames 138. Similar to the front frame 34, the front frame 134 includes an upper frame portion 134a corresponding to the upper frame portion 34a and a lower frame portion 134b corresponding to the lower frame portion 34b. A length of the lower frame portion 134b is shorter than a length of the lower frame portion 34b. The additional frame 34d is omitted in the front frame 134. The intermediate frames 136 correspond to the intermediate frames 36, and the rear frames 138 correspond to the rear frames 38.

Similar to the main frame 30, the main frame 130 supports components including the front wheel 12, the rear wheel 14, and the handle device 20.

Main differences between the motorcycle 110 and the motorcycle 10 are a position of a fuel tank 154 corresponding to the fuel tank 54 and a position of an air cleaner box 150 corresponding to the air cleaner box 50.

That is, the motorcycle 110 includes a driver seat 126 corresponding to the driver seat 26. The driver seat 126 is located above rear portions of the upper frame portions 134a and front portions of the rear frames 138 in a side view. A front end of the driver seat 126 may be located above the rear portion of the cylinder assembly 42. The driver seat 126 may extend rearward from above the rear end portion of the power unit 47. A rear end of the driver seat 126 may be located forward of the rear wheel 14 in the front-rear direction.

A tandem seat 127 is located behind the driver seat 126. A seat surface of the tandem seat 127 is higher than a seat surface of the driver seat 126. The tandem seat 127 extends rearward from the rear end of the driver seat 126 and reaches a position above a central axis of the rear wheel 14.

Similar to the first embodiment, the driver seat 126 and the tandem seat 127 are integrally coupled to form a seat unit 125.

The air cleaner box 150 and the fuel tank 154 are located below the driver seat 126. In the present embodiment, in the front-rear direction, a present range of the air cleaner box 150 is included in a present range of the driver seat 126, and a present range of the fuel tank 154 is included in the present range of the driver seat 126. If half or more of the air cleaner box 150 in the front-rear direction is located below the driver seat 126, it can be said that the air cleaner box 150 is located below the driver seat 126. If half or more of the fuel tank 154 in the front-rear direction is located below the driver seat 126, it can be said that the fuel tank 154 is located below the driver seat 126.

The air cleaner box 150 is supported on, for example, a rear end portion of the upper frame portion 134a. The throttle body 46 is disposed between the air cleaner box 150 and the cylinder assembly 42. Air from the air cleaner box 150 is supplied into the combustion chamber 42r in the cylinder assembly 42 via the throttle body 46.

The air cleaner box 150 may be shifted rearward from an uppermost portion of the internal combustion engine 40. The air cleaner box 150 being shifted rearward from the uppermost portion of the internal combustion engine 40 means that the center of gravity of the air cleaner box 150 is shifted rearward from the uppermost portion of the internal combustion engine 40. When the air cleaner box 150 is shifted rearward from the uppermost portion of the internal combustion engine 40, it is easy to dispose the air cleaner box 150 and the internal combustion engine 40 in an overlapping range in the up-down direction. For example, the air cleaner box 150 is likely to be disposed such that at least a part of the air cleaner box 150 is hidden by the internal combustion engine 40 in a front view. The air cleaner box 150 may take into air from the rear.

In the present embodiment, the cylinder assembly 42 faces obliquely upward and forward. A front end of the air cleaner box 150 is located on an upper rear end of the cylinder assembly 42. The air cleaner box 150 is inclined obliquely downward from the front end toward the rear. Therefore, a rear end of the air cleaner box 150 is disposed in a range overlapping the cylinder assembly 42 in the front-rear direction. Therefore, it is easy to set a height of at least a part of the air cleaner box 150 low as compared with a case in which the entire air cleaner box is disposed at a position higher than the cylinder assembly.

The fuel tank 154 is supported on, for example, the front portions of the rear frames 138. The fuel tank 154 is disposed behind the intermediate frames 136 so as to protrude upward and downward from the rear frames 138. A fuel supply port 154h and a lid 154a that closes the fuel supply port 154h are provided at an upper portion of the fuel tank 154. A rear side surface of the fuel tank 154 may have a shape curved in accordance with an outer shape of a storage portion 124 corresponding to the storage portion 24.

An upper end portion of the air cleaner box 150 and an upper end portion of the fuel tank 154 protrude upward from the main frame 130 at substantially the same height.

The driver seat 126 can collectively cover the air cleaner box 150 and the fuel tank 154 from above.

The storage portion 124 is located behind the fuel tank 154. That is, the air cleaner box 150, the fuel tank 154, and the storage portion 124 are arranged in this order from the front to the rear. The storage portion 124 is supported on, for example, rear portions of the rear frames 138.

Similar to the cover 60, a cover 160 covers left and right sides of the main frame 130 and the internal combustion engine 40. The cover 160 may cover a central portion in the width direction of an upper portion of the air cleaner box 150. The cover 160 may extend to cover entire left and right sides of the fuel tank 154 and the storage portion 124.

Unlike the first embodiment, the air cleaner box 150 is not present in front of the driver seat 126.

The cover 160 is opened to expose upper portions of the air cleaner box 150, the fuel tank 154, and the storage portion 124 to the outside. The seat unit 125 covers the air cleaner box 150, the fuel tank 154, and the storage portion 124 from above by closing the opening.

A front portion of the seat unit 125 is openably and closably coupled to the cover 160. When the seat unit 125 is opened, an upper side of the storage portion 124 is opened, and the storage object 24T is easily taken in and out of the storage portion 124. When the seat unit 125 is opened, the fuel supply port 154h and the lid 154a of the fuel tank 154 are exposed to the outside. Therefore, fuel is easily supplied to the fuel tank 154. When the seat unit 125 is opened, the air cleaner box 150 is also exposed to the outside. Therefore, the air cleaner box 150 can also be easily maintained.

According to the present embodiment, the same operations and effects as those of the first embodiment are obtained except for the operations and effects derived from the fact that the air cleaner box 50 is located in front of the driver seat 26 in the first embodiment.

In addition, the air cleaner box 150 and the fuel tank 154 are located below the driver seat 126, and thus a height of a portion in front of the driver seat 126 is likely to be reduced. Therefore, the driver easily gets on and off the vehicle by straddling the vehicle in front of the driver seat 126.

The air cleaner box 150 is shifted rearward from the uppermost portion of the internal combustion engine 40, and thus the height of the vehicle 10 is likely to be reduced. Accordingly, the getting on and off performance is further improved.

### (Modification)

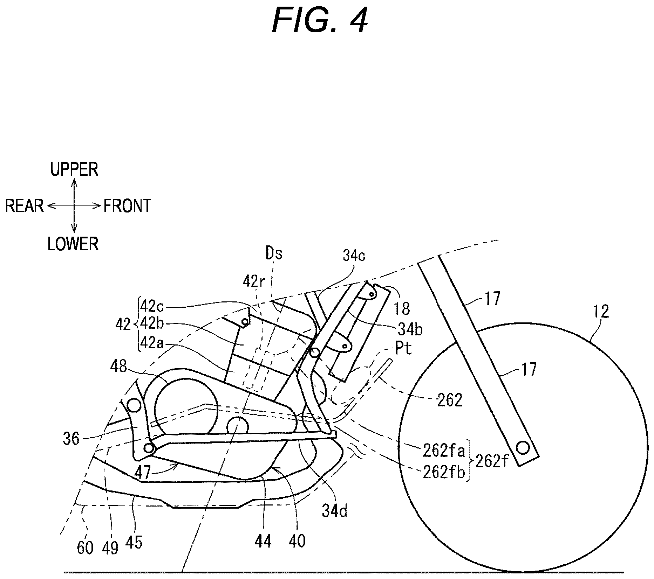

As shown in Fig. 4, the steps 262 may include a placement surface 262f on which a tip portion Pt of the driver who sits on the driver seat 26 is placed. In this case, the placement surface 262f may include a flat surface. For example, the placement surface 262f may include an inclined surface 262fa which gradually increases in height toward the front, and a horizontal surface 262fb which is closer to a horizontal posture than the inclined surface 262fa. The placement surface 262f may include a portion located in front of the front end of the driver seat 26. Additionally, the placement surface 262f may include a portion located in front of the internal combustion engine 40. When the fuel tank 154 is positioned behind the air cleaner box 150, the tip portion Pt can be easily placed on the steps 262 located close to the front of the vehicle, even without the need to spread the legs excessively.

The configurations described in the embodiment and the modification can be appropriately combined as long as they do not contradict each other.

### (Appendix)

The present specification and the drawings disclose the following aspects.

According to a first aspect of the present disclosure, a motorcycle includes: an internal combustion engine; an air cleaner box configured to supply purified air to the internal combustion engine; a fuel tank configured to store fuel; and a main frame configured to support the internal combustion engine, the air cleaner box, and the fuel tank. The internal combustion engine is supported in a posture closer to a vertical posture than a horizontal posture. The air cleaner box is adjacent to the internal combustion engine. The fuel tank is located behind the air cleaner box.

According to the motorcycle, the internal combustion engine is supported in the posture closer to the vertical posture than the horizontal posture, and thus an arrangement space of the internal combustion engine in a front-rear direction can be shortened. Accordingly, the wheelbase can be made shorter as compared with a case in which the internal combustion engine is in a posture close to the horizontal posture. In addition, the fuel tank is located behind the air cleaner box, and thus a height position of the fuel tank can be made lower as compared with the case in which the fuel tank is disposed on the air cleaner box. Accordingly, a getting on and off performance is less likely to deteriorate. In addition, as compared with the case in which the fuel tank is disposed on the air cleaner box, the fuel tank, which is a heavy object, can be disposed close to a position of the center of gravity of the vehicle, and thus a steering stability is further improved.

According to a second aspect of the present discourse, the motorcycle of the first aspect further includes: a storage portion located behind the fuel tank and having a storage space for an article.

In this way, the storage portion is located behind the fuel tank, and thus an occupant can easily put feet down without spreading the feet widely.

According to a third aspect of the present disclosure, the motorcycle of the first or second aspect further includes: a driver seat on which a driver sits, and the air cleaner box is located in front of the driver seat.

Accordingly, the air cleaner box can easily take in the air well.

According to a fourth aspect of the present disclosure, in the motorcycle of the third aspect, the air cleaner box is lower than a seat surface of the driver seat in a side view of the motorcycle.

In this way, if the air cleaner box is lower than the seat surface of the seat, it is easy to get on and off the vehicle by straddling the vehicle in front of the driver seat.

According to a fifth aspect of the present disclosure, in the motorcycle of the third or fourth aspect, the fuel tank is located below the driver seat.

Accordingly, the fuel tank is likely to be brought close to the center of gravity of the vehicle in the front-rear direction.

According to a sixth aspect of the present disclosure, the motorcycle of the first or second aspect further includes: a driver seat on which a driver sits, and the air cleaner box and the fuel tank are located below the driver seat.

Accordingly, a height of a portion in front of the driver seat is likely to be reduced. Therefore, it is easy to get on and off the vehicle by straddling the vehicle in front of the driver seat.

According to a seventh aspect of the present disclosure, in the motorcycle of the sixth aspect, the air cleaner box is shifted rearward from an uppermost portion of the internal combustion engine.

Accordingly, a height of the vehicle is likely to be reduced.

The above description is illustrative in all aspects, and the present invention is not limited thereto. It is understood that an infinite number of modifications not illustrated can be assumed without departing from the scope of the present invention.

## Claims

1. A motorcycle (10, 110) comprising:
an internal combustion engine (40);
an air cleaner box (50, 150) configured to supply purified air to the internal combustion engine (40);
a fuel tank (54, 154) configured to store fuel; and
a main frame configured to support the internal combustion engine (40), the air cleaner box (50, 150), and the fuel tank (54, 154), wherein
the internal combustion engine (40) is supported in a posture closer to a vertical posture than a horizontal posture,
the air cleaner box (50, 150) is adjacent to the internal combustion engine (40), and
the fuel tank (54, 154) is located behind the air cleaner box (50, 150).

2. The motorcycle (10, 110) according to claim 1, further comprising:
a storage portion (24, 124) located behind the fuel tank (54, 154) and having a storage space (24S) for an article.

3. The motorcycle (10) according to claim 1 or 2, further comprising:
a driver seat (26) on which a driver sits, wherein
the air cleaner box (50) is located in front of the driver seat (26).

4. The motorcycle (10) according to claim 3, wherein
the air cleaner box (50) is lower than a seat surface of the driver seat (26) in a side view of the motorcycle.

5. The motorcycle (10) according to claim 3 or 4, wherein
the fuel tank (54) is located below the driver seat (26).

6. The motorcycle (110) according to claim 1 or 2, further comprising:
a driver seat (126) on which a driver sits, wherein
the air cleaner box (150) and the fuel tank (154) are located below the driver seat (126).

7. The motorcycle (110) according to claim 6, wherein
the air cleaner box (150) is shifted rearward from an uppermost portion of the internal combustion engine (40).
